# EUROPÄISCHE PATENTSCHRIFT

(11) **EP 0 501 148 B1**
(45) Veröffentlichungstag und Bekanntmachung des Hinweises auf die Patenterteilung: **28.06.1995**
(21) Anmeldenummer: 92101317.3
(22) Anmeldetag: 28.01.1992
(51) Int. Cl.: F16B 7/18, F16B 35/00, E04F 11/18, F16C 11/00

(54) **Verbindungssystem für zwei als Rohr- oder Stangen- und/oder Knotenelemente ausgebildete Bauteile**
Assembling system for two parts formed as tube or shaft elements and/or two parts having junctions
Système d'assemblage pour deux éléments fabriqués en tube ou tige et/ou éléments ayant des jonctions

(30) Priorität: 26.02.1991 DE 9102252 U
(43) Veröffentlichungstag der Anmeldung: 02.09.1992
(73) Patentinhaber: HEWI HEINRICH WILKE GMBH, D-34454 Arolsen (DE)
(72) Erfinder: Dziuk, Richard, W-3548 Arolsen (DE); Wulfert, Karl-Ludwig, W-3544 Waldeck (DE)
(74) Vertreter: Freiherr von Schorlemer, Reinfried, Dipl.-Phys.

(56) Entgegenhaltungen:
- EP-A- 407 093
- DE-A- 3 407 767
- DE-A- 3 604 305
- DE-U- 9 102 252
- US-A- 1 864 534
- GB-A- 20,648 a.d. 1909 (BOULT)

## Beschreibung

Die Erfindung betrifft ein Verbindungssystem der im Oberbegriff des Anspruchs 1 definierten Gattung.

Verbindungssysteme dieser Art sind vor allem zum baukastenartigen Zusammenbau von zwei- oder dreidimensionalen Gebilden wie Vorhangstangen, Treppengeländern, Handläufen, Dekorations- oder Möbelgestellen, Messe- und Ausstellungsständen oder dergleichen aus runden oder mit anderen Querschnitten versehenen Rohr- oder Stangenelementen und Knotenelementen in Form von 90°-Bögen, T-Stücken, Kreuzstücken oder dergleichen erwünscht (DE-A-26 32 696). Mit bekannten Knotenelementen können aber zwischen den Achsen der Anschlußenden benachbarter Bauteile meistens nur Winkel realisiert werden, die sich bogenförmig über mehr oder weniger als 90° oder ein Vielfaches davon erstrecken. Sind andere Winkel erwünscht, wie dies z.B. bei der Montage von Handtuch- oder Vorhangstangen in Räumen mit zumindest teilweise schrägen Wänden oder Decken häufig der Fall ist, müssen kostspielige Sonderanfertigungen vorgesehen werden.

Zur Vermeidung der dadurch bedingten Kosten sind Verbindungssysteme bekannt geworden (DE-A-29 04 776), bei denen das Winkelelement aus wenigstens einer Hülse mit bogenförmigem Verlauf besteht und ein die Hülse durchragendes Verbindungselement entsprechend gebogen oder schwenkbar oder biegbar ausgebildet ist. Zur Realisierung unterschiedlicher Bogenlängen, beispielsweise solchen entsprechend Winkeln von 12°, 15°, 17° und 18°, sind entsprechend ausgebildete Hülsen vorgesehen, und durch Aneinanderreihung von mehreren solcher Hülsen können viele verschiedene Bögen und Winkel realisiert werden. Aus formalen Gründen ist dies jedoch unerwünscht, weil bei Anwendung mehrerer Hülsen entsprechend viele zusätzliche Stoßfugen entstehen, nur eine stufenweise Veränderung des Winkels möglich ist, beim Aneinanderreihen mehrerer Hülsen kein kreisbogenförmiger, sondern ein polygonzugförmiger Gesamtbogen erhalten wird und letztlich jede Hülse und gegebenenfalls auch das zugehörige Verbindungselement wiederum eine Sonderanfertigung erfordert.

Daneben ist es auch bereits bekannt, Winkelelemente mit einer vorgewählten Einheitslänge bzw. einem vorgewählten Einheitsbogen herzustellen und das Winkelelement und ein Einlegeteil dafür so auszubilden, daß beide auf jede gewünschte Bogenlänge bzw. jeden beliebigen Winkel abgeschnitten und erst danach mit den im Einzelfall erforderlichen Gewindeteilen oder dergleichen versehen werden (DE-A-33 06 830). Als Nachteil wird jedoch empfunden, daß an der Baustelle zusätzliche Arbeiten durchgeführt werden müssen, die hierfür erforderlichen Werkzeuge nicht immer vorhanden sind und fehlerhaft abgelängte Winkelelemente und Einlegeteile kaum noch brauchbar sind.

Schließlich sind Verbindungssysteme der eingangs bezeichneten Gattung bekannt (DE-A-36 04 305), bei denen Rohrelemente mit dazwischen liegenden, kugelförmige Oberflächen aufweisenden Winkelelementen auf Spanndrähte aufgefädelt und dann mittels der Spanndrähte axial miteinander verspannt werden. Da bei derartigen Verbindungssystemen die Spanndrähte an den Enden der Rohrelemente zugänglich sein müssen, erfolgt die Montage der aus diesen zusammengesetzten Gegenstände mit Hilfe von an die Winkelelemente angesetzten Pfosten.

Demgegenüber liegt der Erfindung die Aufgabe zugrunde, die Verbindungssysteme der zuletzt genannten Gattung so auszubilden, daß sie zumindest an einem Ende auf einfache Weise auch unmittelbar an einer Wand oder dergleichen befestigt werden können.

Zur Lösung dieser Aufgabe dienen die kennzeichnenden Merkmale des Anspruchs 1.

Weitere vorteilhatte Merkmale der Erfindung ergeben sich aus den abhängigen Ansprüchen.

Die Erfindung wird nachfolgend in Verbindung mit der beiliegenden Zeichnung an dem derzeit für am besten gehaltenen Ausführungsbeispiel näher erläutert. Es zeigen:
- Fig. 1: einen Längsschnitt durch ein je ein Winkel- und Verbindungselement aufweisendes Verbindungssystem gemäß einer bevorzugten Ausführungsform der Erfindung;
- Fig. 2: die Unteransicht eines Winkelelements des Verbindungssystems nach Fig. 1 in vergrößertem Maßstab;
- Fig. 3: einen Schnitt längs der Linie III-III der Fig. 2;
- Fig. 4 bis 6: die Vorder- und Seitenansicht sowie die Draufsicht eines ersten, zur Herstellung des Verbindungselements nach Fig. 1 bestimmten Bolzens in vergrößertem Maßstab;
- Fig. 7 und 8: die Vorder- und Seitenansicht eines zweiten, zur Herstellung des Verbindungselements nach Fig. 1 bestimmten Bolzens in vergrößertem Maßstab; und
- Fig. 9 und 10: die Vorder- und Seitenansicht des aus den Bolzen nach Fig. 4 bis 8 zusammengesetzten Verbindungselements.

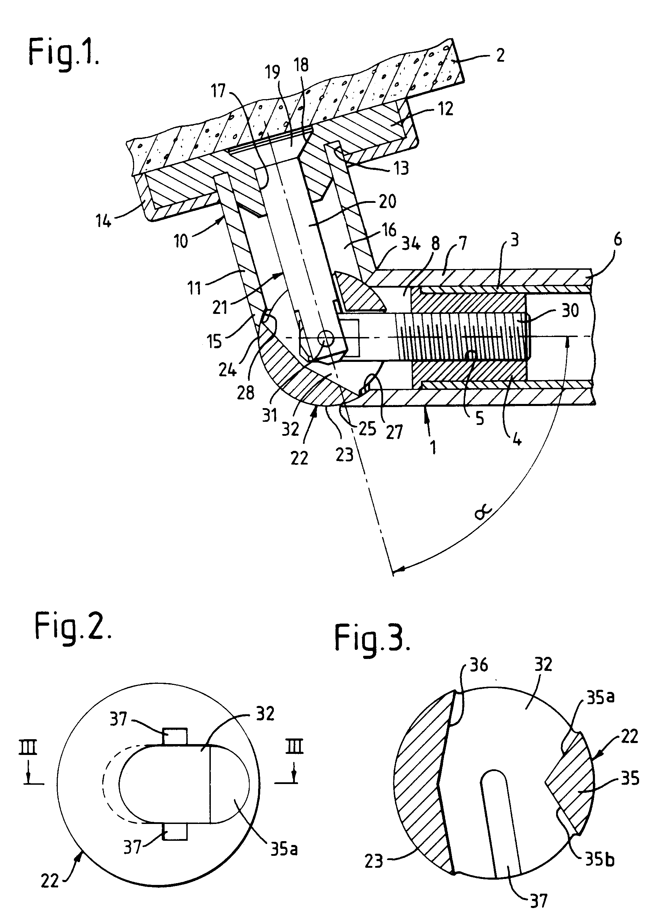

Fig. 1 zeigt ein erstes Bauteil 1, das als Rohrelement ausgebildet ist und beispielsweise als Handtuch- oder Vorhangstange verwendet werden soll, die an einer schrägen Wand 2, Decke oder dergleichen befestigt ist. Das Bauteil 1 besteht z.B. aus einem zylindrischen Metallrohr 3, das an seinem einen Ende mit einem hohlzylindrischen Füllstück 4 versehen ist, das ein Innengewinde 5 aufweist. Das Füllstück 4 ist in bekannter Weise mit dem Metallrohr 3 durch z.B. Kleben, Verstiften oder dergleichen fest verbunden und besteht aus Metall oder Kunststoff. Auf das Metallrohr 3 ist eine zylindrische Ummantelung in Form eines Kunststoffrohrs 6 verschiebbar oder unverschiebbar aufgezogen, das mit seinem einen Ende über das zugehörige Ende des Metallrohrs 3 hinausragt und dadurch ein Anschlußende 7 des Bauteils 1 bildet, das mit einer stirnseitigen zylindrischen Aufnahmeöffnung 8 versehen ist, so daß das Innengewinde 5 ein dem Anschlußende 7 zugeordnetes Gewindeteil bildet.

Zur Befestigung des Bauteils 1 an der Wand 2 dient ein zweites Bauteil 10, das hier als Knotenelement ausgebildet ist. Dieses Bauteil 10 enthält ein kurzes Kunststoffrohr 11, ein aus Kunststoff oder Metall bestehendes Unterteil 12 mit einer Ringnut 13, in die das rückwärtige Ende des Kunststoffrohrs 11 eingesetzt ist, und eine auf das Kunststoffrohr 11 aufgeschobene Abdeckkappe 14, die in bekannter Weise auf das Unterteil 12 aufgeclipst oder in anderer Weise an diesem befestigt werden kann. Das Vorderende des Kunststoffrohrs 11 bildet ein weiteres Anschlußende 15, das mit einer stirnseitigen, zylindrischen Aufnahmeöffnung 16 versehen ist. Im übrigen bilden das Unterteil 12 und die Abdeckkappe 14 eine für die Montage der hier interessierenden Bauteile 1 oder 10 an sich bekannte Rosette.

Das Unterteil 12 weist eine ebene, an der Wand 2 zu liegen kommende Rückseite und mehrere, nicht dargestellte Schraublöcher auf, mittels derer es an der Wand 2 befestigt werden kann, bevor die Abdeckkappe 14 aufgesetzt wird. Ferner weist das Unterteil 12 einen vorzugsweise senkrecht zu seiner Rückseite angeordneten, zentralen, zylindrischen Durchgang 17 auf, der innerhalb der Ringnut 13 verläuft und am rückwärtigen Ende in eine bis zur Rückseite erstreckte Verbreiterung 18 übergeht. Diese Verbreiterung 18 dient zur weitgehend spielfreien Lagerung eines z.B. konischen Kopfes 19 eines in den Durchgang 17 und das Kunststoffrohr 11 ragenden Bolzens 20, indem sie den Kopf 19 bei montiertem Unterteil zwischen sich und der Wand 2 axial unverschiebbar einspannt. Der Bolzen 20 ist der eine Teil eines allgemein mit dem Bezugszeichen 21 bezeichneten Verbindungselements 21.

Zwischen den beiden Anschlußenden 7 und 15 ist ein Winkelelement 22 angeordnet, das eine vorzugsweise kugelförmige Oberfläche 23 besitzt und dadurch wenigstens teilweise in die Aufnahmeöffnungen 8 bzw. 16 ragt, wenn es sich unter Bildung von Stoßfugen 24,25 an die Anschlußenden 7 bzw. 15 anlegt. Um dabei keine störenden Übergänge bzw. Schultern sichtbar werden zu lassen, sind die Anschlußenden 7 bzw. 15 im Bereich der Stoßfugen 24,25 mit entsprechend der Oberfläche 23 konkav gewölbten Anlageflächen 27 und 28 versehen. Entspricht der Durchmesser der kugelförmigen Oberfläche 23 im wesentlichen dem Außendurchmesser der beiden Kunststoffrohre 6 bzw. 11, dann ergeben sich entsprechend Fig. 1 nicht nur die kaum sichtbaren, haarfeinen Stoßfugen 24 und 25, sondern dann münden die äußeren Zylinderflächen der Kunststoffrohre 6 und 11 auch im wesentlichen tangential in die Oberfläche 23 ein, so daß die Oberfläche der Kunststoffrohre 6 und 11 und die Oberfläche 23 schon aus geringer Entfernung keine sichtbaren Diskontinuitäten mehr aufweist, sofern alle Oberflächen dieselben Farben besitzen.

Zur festen Verbindung der Bauteile 1 und 10 dienen der Bolzen 20 und ein weiterer Bolzen 30, der den anderen Teil des Verbindungselements 21 darstellt, als Gewindebolzen ausgebildet ist und ein in das Innengewinde 5 passendes Außengewinde aufweist. Die beiden Bolzen 20,30 sind an einander zugeordneten Enden mittels eines Stifts 31 gelenkig verbunden und mit dem dadurch gebildeten Gelenk in einem Durchgang 32 angeordnet, der das Winkelelement 22 im wesentlichen diametral durchsetzt, einem zumindest geringfügig größeren Durchmesser als einer der Bolzen 20,30 besitzt und mit seinen beiden Enden an der Oberfläche 23 mündet. Wie Fig. 1 zeigt, ist im speziellen Ausführungsbeispiel der Durchgang 32 so groß, daß die beiden Bolzen 20,30 bzw. ihre Achsen um einen Winkel α relativ zueinander verschwenkt werden können, der anders als bei üblichen 90-Bogenelementen zwischen z.B. 0° und etwa 75° liegen kann.

Die Montage der Bauteile 1 und 10 erfolgt z.B. dadurch, daß zunächst der Bolzen 20 von der Rückseite her in den Durchgang 17 des Unterteils 12 eingeführt wird, bis der Kopf 19 in der Verbreiterung 18 angeordnet ist. Das Unterteil 12 wird nun mit seiner Rückseite an die Wand 2 aufgelegt und mittels nicht dargestellter Befestigungsschrauben fest an dieser befestigt. Danach wird das Kunststoffrohr 11 in die Ringnut 13 gesteckt, die Abdeckkappe 14 auf das Unterteil 12 aufgedrückt, der Bolzen 30 mittels des Stifts 31 mit dem Bolzen 20 verbunden und dann das Winkelelement 22 aufgeschoben, bis es am Anschlußende 15 bzw. an der Anlagefläche 28 des Kunststoffrohrs 11 anliegt. Anschließend wird dann das Bauteil 1 mit dem Innengewinde 5 auf den Bolzen 30 aufgeschraubt, bis sein Anschlußende 7 an der kugelförmigen Oberfläche 23 anliegt und das Winkelelement 22 unter Bildung der Stoßfugen 24 und 25 fest zwischen den beiden Bauteilen 1 und 10 verspannt ist. Der im Einzelfall gewünschte Winkel α zwischen den Achsen der Bolzen 20 und 30 bzw. der mit innen vorzugsweise koaxialen Anschlußenden 7 und 15 kann dabei kurz vor dem völligen Festziehen der Verbindung hergestellt werden. Dazu ist die Anordnung zweckmäßig so getroffen, daß die Schwenkachse des Stifts 31 etwa durch den Mittelpunkt der kugelförmigen Oberfläche 23 verläuft.

Alternativ zu dieser Montageart wäre es möglich, insbesondere wenn das in Fig. 1 nicht sichtbare andere Ende des Bauteils 1 bereits mittels eines Knotenelements an der Wand 2 befestigt ist, den Bolzen 30 dadurch in das Füllstück 4 einzudrehen, daß bei koaxial ausgerichteten Bolzen 20 und 30 der Bolzen 20 gedreht wird. Hierzu ist es zweckmäßig, in seinem Kopf 19 ein Mittel zum Ansetzen eines Werkzeugs, z.B. ein Sechskantloch für einen Imbusschlüssel oder einen Schlitz für eine Schraubendreherklinge, vorzusehen.

Schließlich wäre es möglich, auf diese Weise zunächst an beiden Enden des Bauteils 1 ein dem Bauteil 10 entsprechendes Bauteil zu befestigen, um die jeweils herzustellenden Winkelstellungen bei noch nicht ganz festgezogener Verbindung überprüfen und gegebenenfalls korrigieren zu können, und danach beide Unterteile 12 an der Wand 2 und gegebenenfalls einer anderen, geraden Wand zu befestigen

Wie Fig. 1 zeigt, kann der maximale Schwenkwinkel α einerseits dadurch festgelegt werden, daß die beiden Anschlußenden 7 und 15 längs eines kurzen Abschnitts 34 der Stoßfugen 24 und 25 aneinanderstoßen. Um diese Schwenkstellung zu ermöglichen, muß der Durchgang 22 einen ausreichend breiten Querschritt haben. Andererseits kann dem Durchgang 32 aber auch ein so kleiner Querschnitt gegeben werden, daß die Bolzen 20 bzw. 30 an den Endwänden des langlochartigen Durchgangs 32 anschlagen, bevor die Anschlußenden 7 und 15 sich berühren, so daß in diesem Fall der Querschnitt des Durchgangs 32 die Grenzen festlegt, innerhalb von welchen der Winkel α einstellbar ist.

Insgesamt ist der Schwenkbereich außerdem dadurch begrenzt, daß die Enden des Durchgangs 32 bei an sich beliebiger Stellung des Winkelelements 22 von außen nicht sichtbar sein sollen.

Größere Einstellbereiche für den Winkel α ergeben sich bei Anwendung des in Fig. 1 nur angedeuteten und in den Fig. 2 und 3 vergrößert dargestellten Winkelelements 22. Bei diesem weist der Durchgang 32 einen langlochartigen Querschnitt (Fig. 2) auf, der nach der einen Seite hin durch eine Wand 35 begrenzt ist, die zwei zur Anlage der beiden Bolzen 20 und 30 bestimmte Teile 35a,b für den Fall aufweist (Fig. 1),daß der Winkel α seinen größten Wert einnimmt. Damit in diesem Fall die Anschlußenden 7,15 nicht die Herstellung des maximalen Schwenkwinkels α behindern, sind sie im Bereich des Abschnitts 34 zweckmäßig mit nach Art von Gehrungen ausgebildeten Ausnehmungen versehen.

Aus Fig. 1 und 3 ergibt sich außerdem, daß die Bolzen 20,30 in der entgegengesetzten Richtung nur so weit verschwenkt werden können, wie etwa einem Winkel α = 0 entspricht. Andernfalls würden entweder die Bolzen 20,30 an eine der Wand 35 gegenüberliegende Wand 36 anstoßen, die nicht entsprechend der Wand 35 ausgebildet werden kann, weil sonst die an die kugelförmige Oberfläche 23 grenzenden Enden des Durchgangs 32 zu groß ausfallen würden und daher von außen zumindest teilweise sichtbar wären oder die vorzugsweise nur an einer Seite mit gehrungsförmigen Aussparungen versehenen Anschlußenden 7 bzw. 15 aneinander stoßen. Das bedeutet, daß sich zumindest die größeren Winkel nur herstellen lassen, wenn die beiden Kunststoffrohre eine solche Drehwinkelstellung zueinander einnehmen, daß sich die gehrungsartigen Ausnehmungen ihrer Anschlußenden 7 bzw. 15 gegenüberliegen, und wenn gleichzeitig das Winkelelement 23 eine solche Winkeldrehstellung zu den Kunststoffrohren 6,11 einnimmt, daß die Wand 35 dem Abschnitt 34 (Fig. 1) zugewandt ist. Aus diesem Grund sind die den Durchgang 32 seitlich begrenzenden Wandteile mit parallelen Schlitzen 37 (Fig. 2 und 3) versehen, die seitliche Verlängerungen des Stifts 31 aufnehmen, wenn das Gelenk der beiden Bolzen 20,30 in den Durchgang 32 eingeführt wird. Dadurch wird das aus den beiden Bolzen 20,30 gebildete Verbindungselement 21 drehfest im Winkelelement 22 gelagert, was bei der Montage die richtige Anordnung des Winkelelements 22 relativ zu den Bauteilen 1 und 10 erheblich erleichtert.

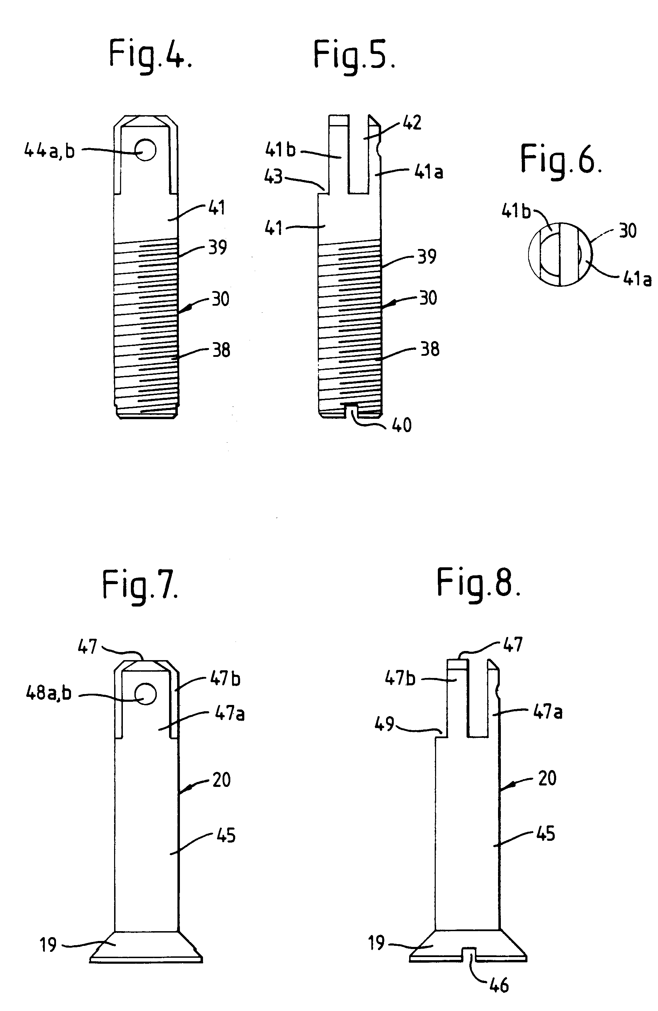

In Fig. 4 bis 8 sind die für die Zwecke der Erfindung geeigneten Bolzen 20 und 30 einzeln und vergrößert dargestellt. Die Bolzen 30 (Fig. 4 bis 6) weisen über den größten Teil ihrer Länge einen Abschnitt 38 mit einem in das Innengewinde 5 passenden Außengewinde 39 auf. Der Abschnitt 38 ist bei Bedarf am einen Ende mit einem Mittel 40 zum Ansetzen eines Werkzeugs, z.B. einer Schraubenzieherklinge, versehen und grenzt am anderen Ende an einen gewindelosen Abschnitt 41, der zwei kammartig angeordnete, achsparalelle Stege 41a,b aufweist, die durch einen bis zu den freien Enden der Stege 41a,b reichenden Schlitz 42 beabstandet sind. Außerdem ist die Anordnung nach Fig. 5 so getroffen, daß die Außenwand des einen Stegs 41a mit dem Außenmantel des Abschnitts 38 im wesentlichen bündig ist, während die Außenwand des anderen Stegs 41b unter Bildung einer Aussparung 43 gegenüber dem Außenmantel des Abschnitts 38 radial nach innen versetzt ist. Dabei ist die Aussparung 43 vorzugsweise wenigstens genau so groß wie der Steg 41a. Beide Stege 41a,b sind außerdem mit mittig angeordneten, koaxialen zylindrischen Bohrungen 44a,b (Fig. 4) versehen.

Die Bolzen 20 weisen nach Fig. 7 und 8 einen gewindelosen, z.B. zylindrischen Schaft 45 auf, der am einen Ende mit dem Kopf 19 (Fig. 1, 7, 8) und einem Mittel 46 zur Aufnahme eines Werkzeugs und am anderen Ende mit einem Abschnitt 47 versehen ist, der mit dem Abschnitt 41 des Bolzens 30 im wesentlichen identisch ist und auch entsprechende Stege 47a,b mit Bohrungen 48a,b sowie eine Aussparung 49 aufweist.

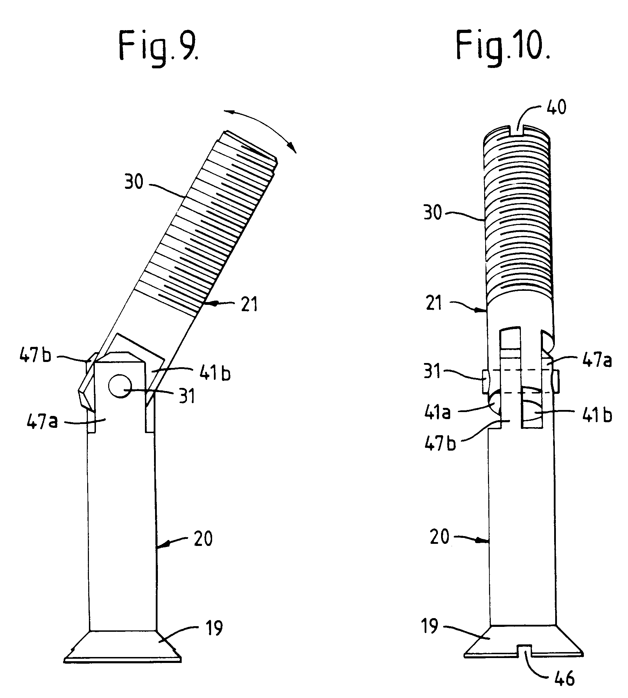

Fig. 9 und 10 zeigen das aus den Bolzen 20 und 30 zusammengesetzte Verbindungselement 21. Die Verbindung der beiden Bolzen 20,30 erfolgt in der Weise, daß die beiden Abschnitte 41,47 entsprechend Fig. 10 ineinandergesteckt werden, wobei der Steg 41b zwischen den Stegen 47a und 47b, der Steg 47b dagegen zwischen den Stegen 41a und 41b zu liegen kommt, und dann die Bohrungen 44a,b und 48a,b aufeinander ausgerichtet werden Abschließend wird der Stift 31 (Fig. 1) in die Bohrungen 44a,b bzw. 48a,b eingesetzt, wodurch die Bolzen 20,30 schwenkbar miteinander verbunden sind. Wegen der Aussparungen 43 und 49, die jeweils die Stege 47a bzw. 41a aufnehmen, kann dabei die Anordnung so getroffen werden, daß die äußere Kontur der Abschnitte 41,47 nicht größer als die äußere Kontur der Abschnitte 38,45 wird und dennoch ein mechanisch stabiles Schwenkgelenk erhalten wird.

Die Erfindung ist nicht auf das beschriebene Ausführungsbeispiel beschränkt, das auf vielfache Weise abgewandelt werden kann. Insbesondere ist es möglich, anstelle einer kugelförmigen Oberfläche des Winkelelements 22 eine ei- oder ellipsoidförmige Oberfläche vorzusehen, sofern diese eine stufenlose Herstellung von unterschiedlichen Winkelstellungen ermöglicht. Der in der Beschreibung und den nachfolgenden Ansprüchen gewählte Ausdruck "kugelförmig" soll alle diese geeigneten Oberflächen einschließen. Außerdem können anstelle der Verbindungselemente 21 wie im Fall der DE-OS 29 04 776 auch solche Verbindungselemente eingesetzt werden, die mit Hilfe von Ketten oder Bändern oder anderen flexiblen Elementen zusammengehaltene Bolzen aufweisen. Schließlich wäre es möglich, den Bolzen 30 durch eine ein Innengewinde aufweisende Hülse zu ersetzen und das Anschlußende 7 mit einem Füllstück zu versehen, das einen nach vorn ragenden, in die Hülse eindrehbaren Gewindebolzen aufweiset. Anstelle dieses Füllstücks könnten aber auch Gewindestangen verwendet werden, die das gesamte Bauteil 1 durchragen und mit ihrem einen Ende z.B. in eine zum Verbindungselement 21 gehörende, schwenkbare Hülse und mit ihrem anderen Ende in ein Gewindeteil eingedreht werden, das am Anschlußende eines anderen Knoten- bzw. Rohr- oder Stangenelements ausgebildet ist.

## Patentansprüche

1. Verbindungssystem von zwei als Rohr- oder Stangen- und/oder Knotenelemente ausgebildete Bauteilen (1,10), die stirnseitige Ausnehmungen und Achsen aufweisende Anschlußenden (7,15) enthalten, mit einem zur Herstellung eines vorgewählten Winkels zwischen den Achsen der Anschlußenden (7,15) bestimmten, unter Bildung von Stoßfugen (24,25) mit den Anschlußenden (7,15) zusammenwirkenden Winkelelement (22) und mit einem dieses durchragenden und an den vorgewählten Winkel anpaßbaren Verbindungselement (21), das zur Verankerung in den Bauteilen (1,10) bestimmte Anschlußelemente aufweist, wobei das Winkelelement (2) eine kugelförmige Oberfläche (23) besitzt, an welcher die beiden Enden eines das Winkelelement (22) durchragenden, das Verbindungselement (21) aufnehmenden Durchgangs (32) münden, und wobei die Anschlußenden (7,15) im Bereich der Stoßfugen (24,25) mit an die kugelförmige Oberfläche (23) angepaßten Anlageflächen (27,28) versehen sind, dadurch gekennzeichnet, daß das Verbindungselement (21) einen Bolzen (20) mit einem Kopf (19) an seinem freien Ende aufweist und das eine Bauteil (10) an seinem freien Ende mit einem zur Befestigung an einer Wand und zur Lagerung des Kopfs (19) bestimmten, einen Durchgang (17) aufweisenden Teil (12) versehen ist.

2. Verbindungssystem nach Anspruch 1, dadurch gekennzeichnet, daß das eine Bauteil (10) ein Rohr (11) enthält, das an einem Ende in einer Ringnut (13) des Teils (12) zu liegen kommt und dessen anderes Ende das Anschlußende (15) dieses Bauteils (10) bildet.

3. Verbindungssystem nach Anspruch 1 oder 2, dadurch gekennzeichnet, daß das Teil (12) aus einem mit Schraublöchern versehenen Unterteil besteht, dem eine Abdeckkappe (14) zugeordnet ist.

4. Verbindungssystem nach einem der Ansprüche 1 bis 3, dadurch gekennzeichnet, daß das Verbindungselement (21) aus zwei gelenkig miteinander verbundenen Bolzen (20,30) besteht.

5. Verbindungssystem nach Anspruch 4, dadurch gekennzeichnet, daß der andere Bolzen (30) ein Gewindebolzen ist.

6. Verbindungssystem nach einem der Ansprüche 1 bis 5, dadurch gekennzeichnet, daß der Durchgang (32) des Verbindungselements (21) einen langlochartigen Querschnitt aufweist und die Anschlußenden (7,15) im Bereich der Anlageflächen (27,28) mit einander zugeordneten, nach Art von Gehrungen zusammenwirkenden Ausschnitten versehen sind.

7. Verbindungssystem nach einem der Ansprüche 1 bis 6, dadurch gekennzeichnet, daß der Durchgang (32) und/oder das Verbindungselement (21) mit einem Mittel (31,37) zur Herstellung einer drehfesten Verbindung zwischen dem Verbindungselement (21) und dem Winkelelement (22) versehen ist.

8. Verbindungssystem nach einem der Ansprüche 1 bis 7, dadurch gekennzeichnet, daß die Enden des Durchgangs (32) von mit dem Verbindungselement (21) zusammenwirkenden Wandungen (35,36) begrenzt sind, die zwei extreme Winkelstellungen zwischen den beiden Bauteilen (1,10) festlegen.

9. Verbindungssystem nach einem der Ansprüche 1 bis 8, dadurch gekennzeichnet, daß der Kopf (19) mit einem Mittel (46) zum Ansetzen eines Werkzeugs versehen ist.

10. Verbindungssystem nach einem der Ansprüche 1 bis 9, dadurch gekennzeichnet, daß das Winkelelement (22) und das Verbindungselement (21) drehfest miteinander verbunden sind.

## Claims

1. Connection system comprising two components (1, 10) in the form of tubular, rod-shaped and/or nodular elements, including on the end faces connector ends (7, 15) having recesses and axes, with an angled member (22) intended to produce a predetermined angle between the axes of the connector ends (7, 15), co-operating with the connector ends (7, 15) to form butt joints (24, 25), and with a connector member (21) penetrating through said angled member (22) and adaptable to the preselected angle, and having specific connector members for anchoring in the components (1, 10), the angled member (22) having a spherical surface (23) into which open the two ends of a passage (32) penetrating through the angled member (22) receiving the connector member (21), and the connector ends (7, 15) being provided in the region of the butt joints (24, 25) with contact surfaces (27, 28) adapted to the spherical surface (23), characterised in that the connector member (21) has on its free end a bolt (20) with a head (19), and one component (10) being provided on its free end with a part (12) intended for attachment to a wall and for providing a bearing for the head (19), and having a passage (17).

2. Connection system according to claim 1, characterised in that one component (10) includes a tube (11) which comes to rest at one end in an annular groove (13) of the part (12), and whose other end forms the connector end (15) of this component (10).

3. Connection system according to claim 1 or 2, characterised in that the part (12) comprises a lower portion provided with screw holes, with which is associated a cover cap (14).

4. Connection system according to one of claims 1 to 3, characterised in that the connector member (21) comprises two bolts (20, 30) articulated to one another.

5. Connection system according to claim 4, characterised in that the other bolt (30) is a threaded bolt.

6. Connection system according to one of claims 1 to 5, characterised in that the passage (32) in the connector member (21) has a slot-shaped cross-section, and the connector ends (7, 15) are provided in the region of the contact surfaces (27, 28) with cut-out portions associated with one another, and co-operating after the fashion of a mitre joint.

7. Connection system according to one of claims 1 to 6, characterised in that the passage (32) and/or the connector member (21) is provided with means (31, 37) for producing a non-rotatable connection between the connector member (21) and the angled member (22).

8. Connection system according to one of claims 1 to 7, characterised in that the ends of the passage (32) are defined by walls (35, 36) co-operating with the connector member (21), and which define two extreme angular positions between the two components (1, 10).

9. Connection system according to one of claims 1 to 8, characterised in that the head (19) is provided with means (46) for applying a tool.

10. Connection system according to one of claims 1 to 9, characterised in that the angled member (22) and the connector member (21) are connected together in a non-rotatabe fashion.

## Revendications

1. Système d'assemblage de deux composants (1, 10), réalisés sous forme d'éléments tubulaires ou en barres et/ou d'éléments de jonction, et comportant des extrémités de jonction (7,15) dotées d'axes et d'évidements côté frontaux, avec un élément angulaire (22), destiné à l'obtention d'un angle présélectionné entre les axes des extrémités de jonction (7, 15), et concourant avec les extrémités de jonction (7, 15) en formant des joints (24, 25), et avec un élément d'assemblage (21), qui passe au travers de cet élément angulaire, est adaptable à l'angle présélectionné, et présente des éléments de jonction destinés à l'ancrage dans les composants (1, 10), l'élément angulaire (2) présentant une surface sphérique (23), sur laquelle débouchent les deux extrémités d'un passage (32), qui traverse l'élément angulaire (22) et reçoit l'élément d'assemblage (21), et les extrémités de jonction (7, 15) étant munies, dans la zone des joints (24, 25), de surfaces d'appui (27, 28) adaptées à la surface sphérique (23), caractérisé en ce que l'élément d'assemblage (21) présente un boulon (20) avec une tête (19) sur son extrémité libre, et en ce qu'un composant (10) est muni sur son extrémité libre d'une partie (12), dotée d'un passage (17) et destinée à la fixation sur une paroi ou au logement de la tête (19).

2. Système d'assemblage suivant la revendication 1, caractérisé en ce que l'un des composants (10) comporte un tube (11), qui entre au contact d'une rainure annulaire (13) de la partie (12) sur une extrémité, et dont l'autre extrémité forme l'extrémité de jonction (15) du composant (10).

3. Système d'assemblage suivant l'une des revendications 1 ou 2, caractérisé en ce que la partie (12) se compose d'une partie inférieure munie de trous de vis, à laquelle est associé un capuchon (14).

4. Système d'assemblage suivant l'une quelconque des revendications 1 à 3, caractérisé en ce que l'élément d'assemblage (21) se compose de deux boulons (20, 30) assemblés entre eux par articulation.

5. Système d'assemblage suivant la revendication 4, caractérisé en ce que l'autre boulon (30) est un boulon fileté.

6. Système d'assemblage suivant l'une quelconque des revendications 1 à 5, caractérisé en ce que le passage (32) de l'élément d'assemblage (21) présente une section en forme de trou oblong, les extrémités de jonction (7, 15) étant munies, dans la zone des surfaces d'appui (27, 28), de découpes mutuellement associées, concourant à la manière d'onglets.

7. Système d'assemblage suivant l'une quelconque des revendications 1 à 6, caractérisé en ce que le passage (32) et/ou l'élément d'assemblage (21) sont munis d'un moyen (31, 37) pour la création d'un assemblage résistant à la torsion entre l'élément d'assemblage (21) et l'élément angulaire (22).

8. Système d'assemblage suivant l'une quelconque des revendications 1 à 7, caractérisé en ce que les extrémités du passage (32) sont délimitées par des parois (35, 36), concourant avec l'élément d'assemblage (21) et déterminant les deux positions angulaires extrêmes entre les deux composants (1, 10).

9. Système d'assemblage suivant l'une quelconque des revendications 1 à 8, caractérisé en ce que la tête (19) est munie d'un moyen (46) pour la pose d'un outil.

10. Système d'assemblage suivant l'une quelconque des revendications 1 à 9, caractérisé en ce que l'élément angulaire (22) et l'élément d'assemblage (21) sont assemblés entre eux sans possibilité de rotation.
